# EUROPEAN PATENT SPECIFICATION

(11) **EP 3 324 498 B1**
(45) Date of publication and mention of the grant of the patent: **20.09.2023**
(21) Application number: 17196834.0
(22) Date of filing: 17.10.2017
(51) Int. Cl.: H01R 13/66, H01R 13/703, H01H 47/00, G06F 1/26, H01R 25/00

(54) **ENERGIZATION METHOD AND APPARATUS FOR POWER STRIP, COMPUTER PROGRAM AND RECORDING MEDIUM**
BESTROMUNGSVERFAHREN UND -VORRICHTUNG FÜR MEHRFACHSTECKDOSE, COMPUTERPROGRAMM UND AUFZEICHNUNGSMEDIUM
PROCÉDÉ ET APPAREIL D'ACTIVATION D'ÉNERGIE POUR BANDE D'ALIMENTATION, PROGRAMME D'ORDINATEUR ET SUPPORT D'ENREGISTREMENT

(30) Priority: 16.11.2016 CN 201611008165
(43) Date of publication of application: 23.05.2018
(73) Proprietor: Beijing Xiaomi Mobile Software Co., Ltd., Beijing 100085 (CN)
(72) Inventor: XIE, Yan, Beijing 100085 (CN)
(74) Representative: dompatent von Kreisler Selting Werner - Partnerschaft von Patent- und Rechtsanwälten mbB

(56) References cited:
- EP-A1- 0 621 659
- US-A- 5 418 679
- US-A1- 2007 149 013
- US-A1- 2009 284 875
- US-A1- 2013 162 053
- US-A1- 2016 079 718

## Description

### TECHNICAL FIELD

The present invention is related to the technical field of smart home, and more particularly, to an energization method and apparatus for a power strip, a computer program and a recording medium.

### BACKGROUND

Generally, various plugs can be inserted into a socket so as to connect with other circuits. With social development and technical progress, people are pursuing a convenient and comfortable life. To meet the requirements of people, various electrical products are developed, and more sockets are needed. Therefore, power strips with multiple sockets play an increasingly important role, and have become a necessity in our daily life.

US 2013/0162053 A1 discloses a power distribution apparatus for supplying power from a direct-current power supply to a load via a first connector and a second connector includes a sensor unit configured to detect connected and disconnected states between the first connector and the second connector, a switch unit configured to make and break a connection between the first connector and the direct-current power supply, a receiver unit configured to receive a signal indicating whether to supply or cut off power to the load, and a control unit configured to control the switch unit to make or break the connection in response to the signal received by the receiver unit and the connected and disconnected states between the first connector and the second connector detected by the sensor unit.

US 5,418,679 A discloses a control circuit for use in an automatically switched power receptacle for communicating with a remote master controller. The power receptacle includes an outlet receptacle adapted to receive a plug, a relay connected between the outlet receptacle and a source of power to selectively power the receptacle and a plug presence sensor in proximity to the receptacle for sensing and developing a signal representing presence or absence of a plug in the receptacle.

### SUMMARY

Embodiments of the present invention provide an energization method and apparatus for a power strip, a computer program and a recording medium. The technical solutions are as below.

The invention is defined by the independent claims. Preferred embodiments of the invention are stipulated in the dependent claims. While several embodiments and/or examples have been disclosed in the description, the subject-matter for which the protection is sought is strictly and solely limited to those embodiments and/or examples encompassed by the scope of the appended claims. Embodiments and/or examples mentioned in the description that do not fall under the scope of the claims are useful for understanding the invention.

According to a first aspect of the present invention, there is provided an energization method for a power strip. The method comprises: de-energizing respective sockets of the power strip; detecting use states of the respective sockets of the power strip using independently powered sensors; and when the use state of a first socket of the power strip is having a plug inserted therein, controlling the first socket to be energized.

The technical solution provided by the present invention may produce the following advantageous effect. The present embodiment can detect the use states of the respective sockets of the power strip using sensors. Only when it is detected that a socket of the power strip has a plug inserted therein, will the socket be energized. Thus, the present embodiment can reduce the risk of occurrence of electric shock due to false contact, and does not require a user's manual operation to energize the sockets, thereby reducing the user's operations.

In an example, not forming part of the present invention, detecting the use states of the respective sockets of the power strip using the independently powered sensors comprises: detecting the light intensity information corresponding to the respective sockets of the power strip using light intensity sensors, the light intensity information indicating light intensities of the respective sockets; and when the light intensity information corresponding to the first socket of the power strip is less than or equal to a preset light intensity threshold, determining the use state of the first socket of the power strip as having a plug inserted therein.

The technical solution provided by the example may produce the following advantageous effect. The present embodiment can determine the use states of the respective sockets of the power strip by detecting the light intensity information corresponding to the respective sockets of the power strip using light intensity sensors. The determination method is convenient and accurate.

In an embodiment, when the light intensity information corresponding to the first socket of the power strip is less than or equal to the preset light intensity threshold, determining the use state of the first socket of the power strip as having a plug inserted therein comprises: when the light intensity information corresponding to the first socket of the power strip is less than or equal to the preset light intensity threshold, and the light intensity information corresponding to at least one second socket other than the first socket of the power strip is greater than the preset light intensity threshold, determining the use state of the first socket of the power strip as having a plug inserted therein.

The technical solution provided by the embodiment of the present invention may produce the following advantageous effect. When the power strip is not in a completely dark environment, the present embodiment can determine that a socket of the power strip has a plug inserted therein, by detecting by a light intensity sensor that the light intensity information corresponding to the socket is less than or equal to the preset light intensity threshold. The determination method is more accurate.

In an example, not forming part of the present invention, detecting the use states of the respective sockets of the power strip using the independently powered sensors comprises: detecting by a distance sensor a distance between an inserted object in each of the respective sockets and the distance sensor; and when a distance between an inserted object in the first socket of the power strip and the distance sensor is less than or equal to a preset distance threshold, determining the use state of the first socket of the power strip as having a plug inserted therein.

The technical solution provided by the example may produce the following advantageous effect. The present embodiment can determine that a socket of the power strip has a plug inserted therein, when detecting by a distance sensor that the distance between an inserted object in the socket and the distance sensor is less than or equal to a preset distance threshold. The present embodiment will not make false determination in various light conditions. The determination method is more accurate.

According to the invention, detecting the use states of the respective sockets of the power strip using the independently powered sensors comprises: when the light intensity information of each socket of the power strip is less than or equal to the preset light intensity threshold, detecting by a distance sensor a distance between an inserted object in each of the respective sockets and the distance sensor; when a distance between an inserted object in the first socket of the power strip and the distance sensor is less than or equal to a preset distance threshold, determining the use state of the first socket of the power strip as having a plug inserted therein.

The technical solution provided by the present invention may produce the following advantageous effect. The present embodiment can determine whether a socket of the power strip has a plug inserted therein through detection of a distance sensor after detecting by a light intensity sensor that the light intensity information corresponding to each socket is less than or equal to the preset light intensity threshold, thereby reducing the occurrence of false determination. The determination method is more accurate.

In an embodiment, when a socket is a two-phase socket, a sensor is arranged in a recess between two holes of the two-phase socket; and when a socket is a three-phase socket, a sensor is arranged in a recess between three holes of the three-phase socket. The sensor is exposed in the air.

The technical solution provided by the embodiment of the present invention may produce the following advantageous effect. By placing a sensor in a recess at the center of each socket, the present embodiment can be realized easily without having to change other parts of the power strip, thereby facilitating manufacture of the power strip.

In an embodiment, a sensor is arranged at the bottom of a hole of each socket, and is exposed to the air or the environment of the socket.

The technical solution provided by the embodiment of the present invention may produce the following advantageous effect. By placing a sensor in a hole of each socket, the sensor can determine the use state of each socket of the power strip more accurately.

According to a second aspect of an embodiment of the present invention, there is provided an energization apparatus for a power strip. The apparatus comprises: a power supply module configured to control power supply of respective sockets of the power strip and to de-energize the respective sockets of the power strip; a detection module configured to detect use states of the respective sockets of the power strip using independently powered sensors; and a control module configured to, when the use state of a first socket of the power strip is having a plug inserted therein, control the first socket to be energized.

In an example, not forming part of the invention, the detection module comprises: a first detection sub-module configured to detect the light intensity information corresponding to the respective sockets of the power strip using light intensity sensors, the light intensity information indicating light intensities of the respective sockets; and a first determination sub-module configured to, when the light intensity information corresponding to the first socket of the power strip is less than or equal to a preset light intensity threshold, determine the use state of the first socket of the power strip as having a plug inserted therein.

In an embodiment, the first determination sub-module is further configured to, when the light intensity information corresponding to the first socket of the power strip is less than or equal to the preset light intensity threshold, and the light intensity information corresponding to at least one second socket other than the first socket of the power strip is greater than the preset light intensity threshold, determine the use state of the first socket of the power strip as having a plug inserted therein.

In an example, not forming part of the invention, the detection module comprises: a second detection sub-module configured to detect by a distance sensor a distance between an inserted object in each of the respective sockets and the distance sensor; and a second determination sub-module configured to, when a distance between an inserted object in the first socket of the power strip and the distance sensor is less than or equal to a preset distance threshold, determine the use state of the first socket of the power strip as having a plug inserted therein.

According to the invention, the detection module further comprises: a third detection sub-module configured to, when the light intensity information of each socket of the power strip is less than or equal to the preset light intensity threshold, detect by a distance sensor a distance between an inserted object in each of the respective sockets and the distance sensor; and a third determination sub-module configured to, when a distance between an inserted object in the first socket of the power strip and the distance sensor is less than or equal to a preset distance threshold, determine the use state of the first socket of the power strip as having a plug inserted therein.

In an embodiment, when a socket is a two-phase socket, a sensor is arranged in a recess between two holes of the two-phase socket; and when a socket is a three-phase socket, a sensor is arranged in a recess between three holes of the three-phase socket. The sensor is exposed in the air.

In an embodiment, the sensor is arranged at the bottom of a hole of each socket, and is exposed in the air.

According to a third aspect of an embodiment of the present invention, there is provided an energization apparatus for a power strip. The apparatus comprises: a processor, and a memory configured to store instructions executable by the processor, wherein the processor is configured for: de-energizing respective sockets of the power strip; detecting use states of the respective sockets of the power strip using independently powered sensors; and when the use state of a first socket of the power strip is having a plug inserted therein, controlling the first socket to be energized.

In one particular embodiment, the steps of the energization method for a power strip are determined by computer program instructions.

Consequently, according to a fourth aspect, the invention is also directed to a computer program for executing the steps of the energization method for a power strip as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing an energization method for a power strip according to an exemplary embodiment.
Fig. 2 is schematic structural view of a power strip according to an exemplary embodiment.
Fig. 3 is schematic structural view of a power strip according to an exemplary embodiment.
Fig. 4 is a flow chart showing an energization method for a power strip according to an exemplary embodiment.
Fig. 5 is a flow chart showing an energization method for a power strip according to an exemplary embodiment.
Fig. 6 is a flow chart showing an energization method for a power strip according to an exemplary embodiment.
Fig. 7 is a block view of an energization apparatus for a power strip according to an exemplary embodiment.
Fig. 8 is a block view of an energization apparatus for a power strip according to an exemplary embodiment.
Fig. 9 is a block view of an energization apparatus for a power strip according to an exemplary embodiment.
Fig. 10 is a block view of an energization apparatus for a power strip according to an exemplary embodiment.
Fig. 11 is a block view of an energization apparatus for a power strip according to an exemplary embodiment.
Fig. 12 is a block view of an energization apparatus for a power strip according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims. The scope of the invention is defined by the appended claims.

In the related art, a power strip can be energized according to two methods. In the first method, when the power strip is connected with a power supply, all sockets of the power strip are directly energized. As such, some sockets having no plug inserted therein are also energized, which may easily result in occurrence of electric shock due to false contact. In the second method, when the power strip is connected with a power supply and a power button corresponding to a socket is pressed down, the socket of the power strip is energized. This requires a user to press down the corresponding power button by hand. In addition, a user may forget to reset the button after pulling off the plug from the socket. Accordingly, some socket may be energized even if it has no plug inserted therein, which may easily result in occurrence of electric shock due to false contact.

In order to solve above problems, the present embodiment can detect the use states of the respective sockets of the power strip using sensors. Only when it is detected that a socket of the power strip has a plug inserted therein, will the socket be energized. Thus, the present embodiment can reduce the risk of occurrence of electric shock due to false contact, and does not require a user's manual operation to energize the sockets, thereby reducing the user's operations.

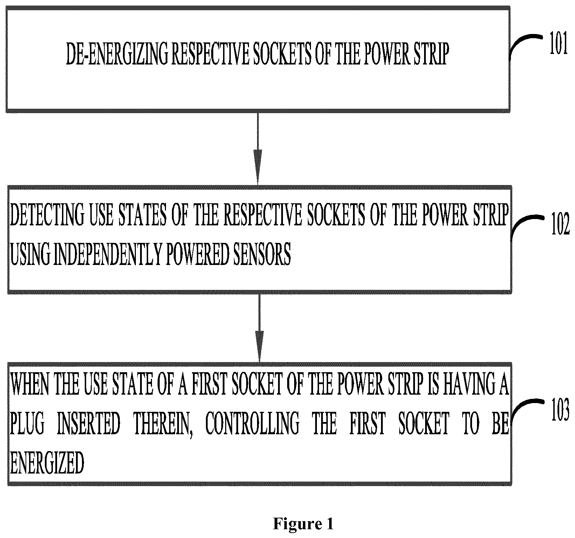

Fig. 1 is a flow chart showing an energization method for a power strip according to an exemplary embodiment. As shown in Fig. 1, the method may be implemented by a power strip, a terminal or the like, and includes steps 101-103.

In Step 101, respective sockets of the power strip are de-energized.

In Step 102, use states of the respective sockets of the power strip are detected using independently powered sensors.

In Step 103, when the use state of a first socket of the power strip is having a plug inserted therein, the first socket is controlled to be energized.

In the present embodiment, sensors are arranged on the power strip for detecting the use states of the respective sockets of the power strip. The energization method for power strip according to the present embodiment can be implemented by an energization apparatus in a power strip or terminal.

In the present embodiment, each socket corresponds to a sensor for detecting the use state of the corresponding socket. Since the sensor needs to detect use states of respective sockets all the time, the power strip will independently supply power to these sensors after being energized, but will de-energize respective sockets of the power strip. A socket can be energized only when the corresponding sensor detects that the socket has a plug inserted therein. Independent power supply here refers to using a power supply circuit different from that for sockets.

In the present embodiment, the energization method for a power strip can be applied to an energization apparatus in a terminal. After detecting the use states of respective sockets, sensors of the power strip can send the use states of respective sockets to the energization apparatus in the terminal. In this way, the energization apparatus in the terminal can detect use states of respective sockets via sensors. Alternatively, the energization method for a power strip can be applied to the energization apparatus in the power strip. After detecting the use states of respective sockets, the sensors can send the use states of respective sockets to the energization apparatus in the power strip. In this way, the energization apparatus in the power strip can detect the use states of respective sockets via the sensors.

In the present embodiment, the energization apparatus in the terminal or the power strip acquires the use states of respective sockets. For example, the power strip has socket 1, socket 2 and socket 3, and the energization apparatus needs to de-energize socket 1, socket 2 and socket 3. If the energization apparatus learns that only the use state of socket 1 is having a plug inserted therein, the energization apparatus controls socket 1 to be energized so as to supply power to the inserted plug. As socket 2 and socket 3 are in the use states of having no plug inserted therein, the energization apparatus doesn't control socket 2 and socket 3 to be energized, thereby reducing the risk of occurrence of electric shock due to false contact.

The present embodiment can detect the use states of the respective sockets of the power strip using sensors. Only when a socket of the power strip is connected with a plug, will the socket be energized. Thus, the present embodiment can reduce the risk of occurrence of electric shock due to false contact, and does not require a user's manual operation to energize the sockets, thereby reducing the user's operations.

As a possible embodiment, step 102 may include steps A1 and A2.

In Step A1, light intensity information corresponding to the respective sockets of the power strip is detected using light intensity sensors, the light intensity information indicating light intensities of the respective sockets.

In step A2, when the light intensity information corresponding to the first socket of the power strip is less than or equal to the preset light intensity threshold, the use state of the first socket of the power strip is determined as having a plug inserted therein.

In the present embodiment, when the light intensity information corresponding to the first socket of the power strip is greater than the preset light intensity threshold, the use state of the first socket of the power strip is determined as having no plug inserted therein.

In the present embodiment, the sockets of the power strip include various sockets supplying power to corresponding plugs, such as Universal Serial Bus (USB) sockets, two-phase sockets and three-phase sockets.

If a plug is inserted to a socket, the plug can block light rays. Therefore, in the present embodiment, a light intensity sensor can be arranged in each socket of the power strip; and the light intensity sensor can be disposed at a position guaranteeing that the light intensity information detected by the light intensity sensor can be used to indicate the light intensity in the socket, such as disposed in a hole of the socket or on the power strip panel covered by the plug. When the sensor is placed in the hole, higher light intensity in the hole of the socket represents higher light intensity in the socket to which the hole belongs. Thus, after the energization apparatus detects the light intensity information corresponding to respective sockets of the power strip, if the light intensity information corresponding to a socket on the power strip is less than or equal to a preset light intensity threshold, it indicates less light intensity in the socket and the socket has had a plug inserted therein. At this time, the use state of the socket can be determined as having a plug inserted therein. Of course, if the light intensity information corresponding to a socket of the power strip is greater than the preset light intensity threshold, it indicates greater light intensity in the socket and the socket has no a plug inserted therein. At this time, the use state of the socket can be determined as having no plug inserted therein.

In the present embodiment, light intensity information corresponding to a socket detected by the light intensity sensor when the socket has no plug inserted therein along with light intensity information corresponding to a socket detected by the light intensity sensor when the socket has a plug inserted therein can be collected in various illumination conditions for big data analysis, so as to obtain an appropriate light intensity value whereby it can be discerned to the most favorable degree whether the socket has a plug inserted therein. The light intensity value is preset as the light intensity threshold.

For example, assuming that the light intensity value from completely dark to fully bright is 0-100 and the preset light intensity threshold is 20, when it is detected by a light intensity sensor that the light intensity information corresponding to a socket is 2 which is less than the preset light intensity threshold 20, it is determined that the socket has a plug inserted therein and the socket is controlled to be energized.

The present embodiment can detect light intensity corresponding to respective sockets of a power strip via light intensity sensors so as to determine the use states of respective sockets of the power strip conveniently and accurately.

With the method described in the embodiment above, in a completely dark environment such as a night with lights off, the energization apparatus may detect that light intensity information corresponding to each socket of the power strip using the light intensity sensor is less than or equal to the preset light intensity threshold. At this time, the energization apparatus controls respective sockets to be energized, which can easily cause electric shock due to false contact.

Therefore, as a possible implementation, in order to guarantee the use states of determined sockets are more accurate and to reduce the rate of false determination, step A2 can be realized as step A21.

In step A21, when the light intensity information corresponding to the first socket of the power strip is less than or equal to the preset light intensity threshold and the light intensity information corresponding to at least one second socket other than the first socket is greater than the preset light intensity threshold, the use state of the first socket of the power strip is determined as having a plug inserted therein.

In the embodiment, if the light intensity information corresponding to at least one socket (for example, the second socket) of the power strip is greater than the preset light intensity threshold, it indicates that the power strip is not in a completely dark environment. At this time, if light intensity in another socket (for example, the first socket) of the strip is less than or equal to the preset light intensity threshold, the use state of the first socket of the power strip is determined as having a plug inserted therein, and the first socket is controlled to be energized.

When the power strip is not in a completely dark environment, the present embodiment can determine that a socket of the power strip has a plug inserted therein, by detecting by a light intensity sensor that the light intensity information corresponding to the socket is less than or equal to the preset light intensity threshold. The determination method is more accurate.

As a possible implementation, step 102 may include steps B1 and B2.

In Step B1, a distance between an inserted object in each of the respective sockets and the distance sensor is detected by a distance sensor.

In Step B2, when a distance between an inserted object in the first socket of the power strip and the distance sensor is less than or equal to a preset distance threshold, the use state of the first socket of the power strip is determined as having a plug inserted therein.

In the present embodiment, when the distance to the distance sensor is greater than the preset distance threshold, the use state of the first socket of the power strip is determined as having no plug inserted therein.

If a socket has a plug inserted therein, the plug is close to respective corresponding parts of the socket. Therefore, in the embodiment, a distance sensor can be provided for each socket on the power strip, and the distance sensor is disposed at a position guaranteeing that the distance information detected by the distance sensor can be used to indicate whether the socket has a plug inserted therein, such as disposed in a hole of the socket. If the distance sensor in the hole detects that the inserted object is close to the distance sensor, it indicates that the socket to which the hole belongs has a plug inserted therein. In this way, the energization apparatus can detect the distance information between inserted objects in respective sockets of the power strip and the distance sensors. There is no distance information if no inserted object is detected, and it indicates that the socket has no plug inserted therein. If distance information is detected and the distance is less than or equal to the preset distance threshold, it indicates that the socket has a plug inserted therein. Then, the use state of the socket can be determined as having a plug inserted therein.

In the embodiment, the maximal distance between the inserted object and the distance sensor detected by the distance sensor when the socket has a plug inserted therein and can be energized may be collected and preset as a distance threshold, such as 5mm.

The present embodiment can determine that a socket of the power strip has a plug inserted therein, when detecting by a distance sensor that the distance between an inserted object in the socket and the distance sensor is less than or equal to a preset distance threshold. The present embodiment will not make false determination in various illumination conditions. The determination method is more accurate.

As a possible embodiment, step 102 may include steps C1 and C2.

In step C1, when the light intensity information corresponding to each socket of the power strip is less than or equal to the preset light intensity threshold, a distance sensor detects a distance between an inserted object in each of the respective sockets and the distance sensor.

In step C2, when a distance between an inserted object in the first socket of the power strip and the distance sensor is less than or equal to a preset distance threshold, the use state of the first socket of the power strip is determined as having a plug inserted therein.

In the present embodiment, if the light intensity sensor detects that light intensity information corresponding to the first socket on the power strip is less than or equal to the preset threshold, the use state of the first socket of the power strip is determined as having no plug inserted therein. At night with lights off or in other completely dark environments, the energization apparatus may detect that light intensity information corresponding to each socket is less than or equal to the preset light intensity threshold. At this time, the energization apparatus will make a false determination that each socket has a plug inserted therein. In order to reduce false determination, in the embodiment, when the light intensity sensor detects that the light intensity information corresponding to each socket of the power strip is less than or equal to the preset distance threshold, distances between the inserted objects in respective sockets of the power strip and the distance sensors can be detected with the distance sensor. When the distance between the inserted object in the first socket of the power strip and the distance sensor is less than or equal to the preset distance threshold, it indicates that the first socket has a plug inserted therein, thereby determining the use state of the first socket of the power strip as having a plug inserted therein. When the distance between the inserted object in the first socket of the power strip and the distance sensor is greater than the preset distance threshold, it indicates that the first socket has no plug inserted therein, and the use state of the first socket of the power strip is determined as having no plug inserted therein.

The present embodiment can determine whether a socket of the power strip has a plug inserted therein, when detecting by a light intensity sensor that the light intensity information corresponding to the socket is less than or equal to the preset light intensity threshold, thereby reducing the occurrence of false determination. The determination method is more accurate.

In a possible embodiment, when a socket is a two-phase socket, a sensor is arranged in a recess between two holes of the two-phase socket; and when a socket is a three-phase socket, a sensor is arranged in a recess between three holes of the three-phase socket.

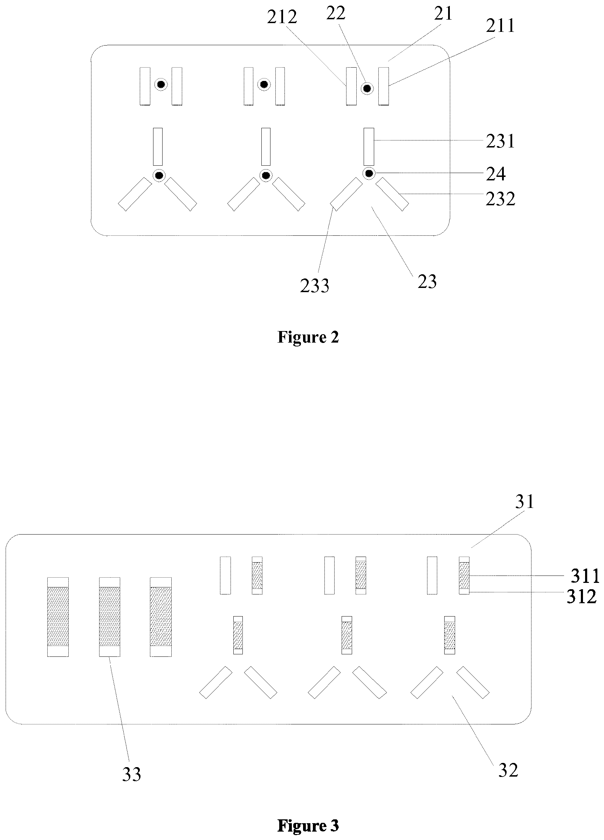

In the embodiment, Fig.2 is schematic view showing arrangement positions of sensors in a power strip according to an exemplary embodiment. Referring to Fig.2, when the socket is a two-phase socket 21, a recess 22 can be arranged between the hole 211 and the hole 212 of the two-phase socket so as to arrange the sensor in the recess 22. When the socket is a three-phase socket 23, a recess 24 can be arranged between the hole 231, the hole 232 and the hole 233 of the three-phase socket 23 so as to arrange the sensor in the recess 24. The sensor is configured to detect an inserted object in the socket, so the sensor is exposed in the air.

In the present embodiment, the sensor may include a light intensity sensor arranged in the recess. If the socket has a plug inserted therein, the plug can block the light ray directed into the recess. In this way, the light intensity sensor can detect the light intensity in the recess, namely the light intensity information corresponding to the socket is less than or equal to the preset light intensity threshold, thereby determining that the socket has a plug inserted therein.

In the present embodiment, the sensor can also include a distance sensor arranged in the recess. If a plug is inserted into a socket, the pins of the plug are inserted into the holes and the surface of the plug shall be above the recess. In this way, the distance sensor can detect that the distance between the inserted object in the socket and the distance sensor is less than or equal to the distance threshold, thereby determining the socket has a plug inserted therein.

By placing a sensor in a recess at the center of each socket, the present embodiment can be realized easily without having to change other parts of the power strip, thereby facilitating manufacture of the power strip.

As a possible embodiment, a sensor is arranged at the bottom of a hole of each socket.

In the present embodiment, a sensor can be directly arranged at bottom of a hole of each socket. Fig. 3 is schematic view showing arrangement positions of sensors in a power strip according to an exemplary embodiment. Referring to Fig. 3, when the socket is a two-phase socket 31, three-phase socket 32 or USB socket 33, the bottom of the hole can be divided into two regions, namely a plug contact region 311 and a sensor arrangement region 312. At this time, the bottom of the pin of the plug can be taper-shaped so as to only contact the contact region 311 so long as the area of the bottom of the pin doesn't exceed that of the plug contact region. To detect whether there is an inserted object in the socket, the sensor is exposed in the air.

In the embodiment, the sensor may include a light intensity sensor arranged in a hole. If a plug is inserted into a socket, the plug can block the light ray irradiating into the hole. In this way, the light intensity sensor can detect the light directed into the hole. In this way, the light intensity sensor can detect the light intensity in the hole, namely that the light intensity information corresponding to the socket is less than or equal to the preset light intensity threshold, thereby determining that the socket has a plug inserted therein.

In the present embodiment, the sensor can also include a distance sensor arranged in a hole. If a plug is inserted into a socket, the pins of the plug are inserted into the holes and the bottoms of the pins of the plug are above the bottoms of the holes. In this way, the distance sensor can detect that the distance between the inserted object in the socket and the distance sensor is less than or equal to the preset distance threshold, thereby determining the socket has a plug inserted therein.

In the present embodiment, a sensor may be arranged at the bottom of a hole of each socket, so that the use state of each socket of the power strip detected by the sensor is more accurate.

The implementation process will be described in detail through the following embodiments.

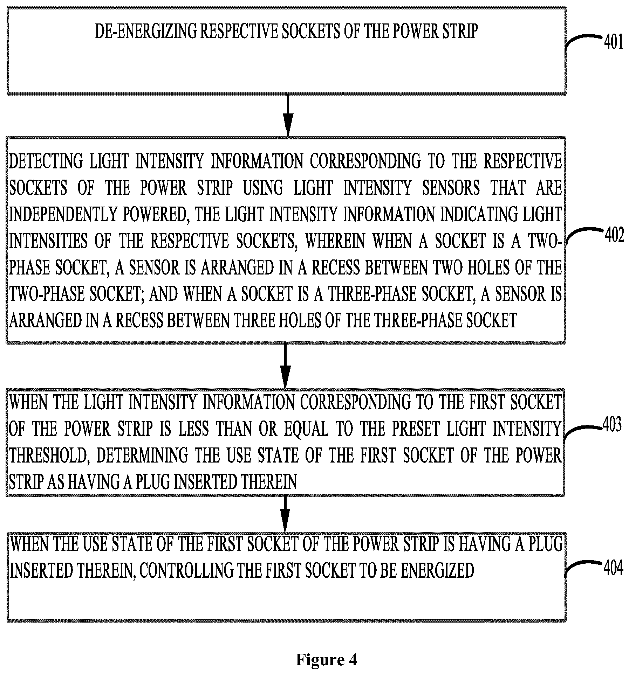

Fig. 4 is a flow chart showing an energization method for a power strip according to an exemplary embodiment. As shown in Fig. 4, the method may be implemented by a power strip, a terminal or the like, and includes steps 401-404.

In Step 401, respective sockets of the power strip are de-energized.

In Step 402, light intensity information corresponding to the respective sockets of the power strip is detected using light intensity sensors that are independently powered, the light intensity information indicating light intensities of the respective sockets. When a socket is a two-phase socket, a sensor is arranged in a recess between two holes of the two-phase socket; and when a socket is a three-phase socket, a sensor is arranged in a recess between three holes of the three-phase socket.

In Step 403, when the light intensity information corresponding to the first socket of the power strip is less than or equal to the preset light intensity threshold, the use state of the first socket of the power strip is determined as having a plug inserted therein.

In Step 404, when the use state of the first socket of the power strip is having a plug inserted therein, the first socket is controlled to be energized.

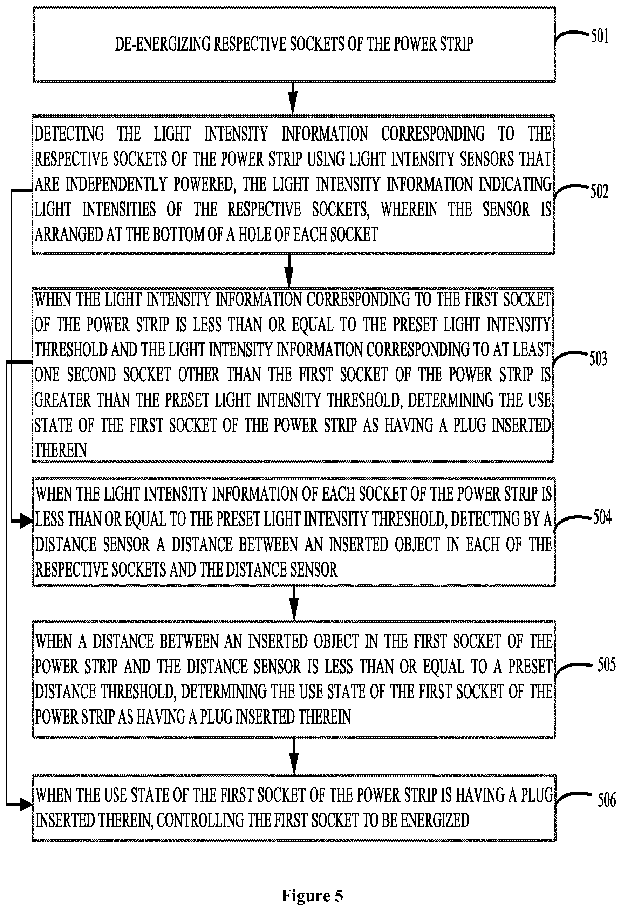

Fig. 5 is a flow chart showing an energization method for a power strip according to an exemplary embodiment. As shown in Fig. 5, the method may be implemented by a power strip, a terminal or the like, and includes steps 501-506.

In Step 501, respective sockets of the power strip are de-energized.

In Step 502, light intensity information corresponding to the respective sockets of the power strip is detected using light intensity sensors that are independently powered, the light intensity information indicating light intensities of the respective sockets. The sensor is arranged at the bottom of a hole of each socket.

In Step 503, when the light intensity information corresponding to the first socket of the power strip is less than or equal to the preset light intensity threshold and the light intensity information corresponding to at least one second socket other than the first socket of the power strip is greater than the preset light intensity threshold, the use state of the first socket of the power strip is determined as having a plug inserted therein.

In Step 504, when the light intensity information of each socket of the power strip is less than or equal to the preset light intensity threshold, a distance between an inserted object in each of the respective sockets and the distance sensor is detected by a distance sensor.

In Step 505, when a distance between an inserted object in the first socket of the power strip and the distance sensor is less than or equal to a preset distance threshold, the first socket of the power strip is determined as having a plug inserted therein.

In Step 506, when the use state of the first socket of the power strip is having a plug inserted therein, the first socket is controlled to be energized.

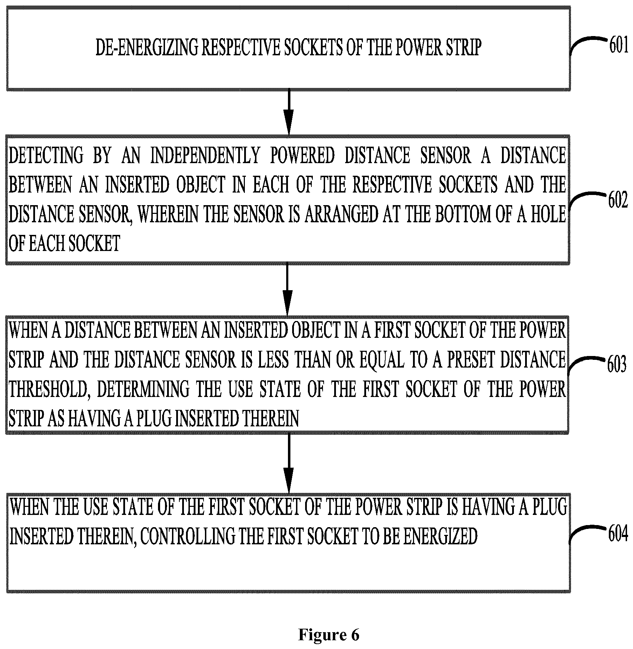

Fig. 6 is a flow chart showing an energization method for a power strip according to an exemplary embodiment. As shown in Fig. 6, the method may be implemented by a power strip, a terminal or the like, and includes steps 601-604.

In Step 601, respective sockets of the power strip are de-energized.

In Step 602, a distance between an inserted object in each of the respective sockets and an independently powered distance sensor is detected by the distance sensor, wherein the sensor is arranged at the bottom of a hole of the socket.

In Step 603, when a distance between an inserted object in a first socket of the power strip and the distance sensor is less than or equal to a preset distance threshold, the use state of the first socket of the power strip is determined as having a plug inserted therein.

In Step 604, when the use state of the first socket of the power strip is having a plug inserted therein, the first socket is controlled to be energized.

The followings are apparatus embodiments of the present invention, which may be used to execute the method embodiments.

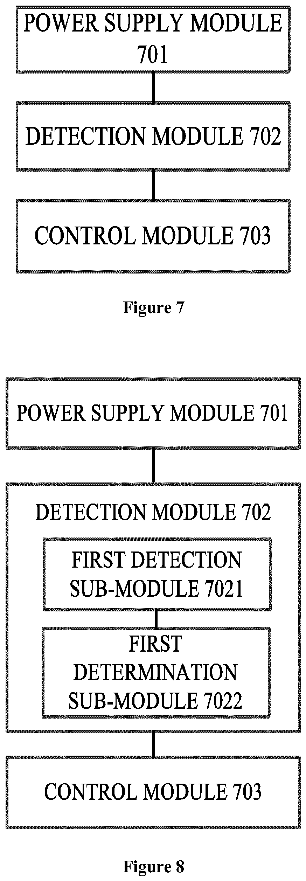

Fig. 7 is a block view of an energization apparatus for a power strip according to an exemplary embodiment. The apparatus may be implemented as a part or the entirety of an electronic device through software, hardware or a combination thereof. As shown in Fig. 7, the energization apparatus for a power strip comprises a power supply module 701, a detection module 702 and a control module 703.

The power supply module 701 is configured to control power supply of respective sockets of the power strip and to de-energize the respective sockets of the power strip.

The detection module 702 is configured to detect use states of the respective sockets of the power strip using independently powered sensors.

The control module 703 is configured to, when the use state of a first socket of the power strip is having a plug inserted therein, control the first socket to be energized.

As a possible embodiment, in the above energization apparatus for a power strip, the detection module 702 may be configured to comprise a first detection sub-module 7021 and a first determination sub-module 7022. Fig. 8 is a block view related with such an energization apparatus for a power strip.

The first detection sub-module 7021 is configured to detect the light intensity information corresponding to the respective sockets of the power strip using light intensity sensors, the light intensity information indicating light intensities of the respective sockets.

The first determination sub-module 7022 is configured to, when the light intensity information corresponding to the first socket of the power strip is less than or equal to a preset light intensity threshold, determine the use state of the first socket of the power strip as having a plug inserted therein.

As a possible embodiment, the first determination sub-module 7022 is configured to, when the light intensity information corresponding to the first socket of the power strip is less than or equal to the preset light intensity threshold, and the light intensity information corresponding to at least one second socket other than the first socket of the power strip is greater than the preset light intensity threshold, determine the use state of the first socket of the power strip as having a plug inserted therein.

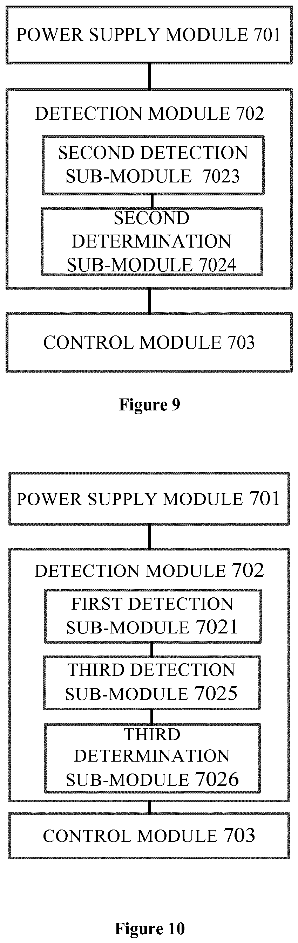

As a possible embodiment, in the above energization apparatus for a power strip, the detection module 702 may be configured to comprise a second detection sub-module 7023 and a second determination sub-module 7024. Fig. 9 is a block view related with such an energization apparatus for a power strip.

The second detection sub-module 7023 is configured to detect by a distance sensor a distance between an inserted object in each of the respective sockets and the distance sensor.

The second determination sub-module 7024 is configured to, when a distance between an inserted object in the first socket of the power strip and the distance sensor is less than or equal to a preset distance threshold, determine the use state of the first socket of the power strip as having a plug inserted therein.

As a possible embodiment, in the above energization apparatus for a power strip, the detection module 702 may be configured to comprise a third detection sub-module 7025 and a third determination sub-module 7026. Fig. 10 is a block view related with such an energization apparatus for a power strip.

The third detection sub-module 7025 is configured to, when the light intensity information of each socket of the power strip is less than or equal to the preset light intensity threshold, detect by a distance sensor a distance between an inserted object in each of the respective sockets and the distance sensor.

The third determination sub-module 7026 is configured to, when a distance between an inserted object in the first socket of the power strip and the distance sensor is less than or equal to a preset distance threshold, determine the use state of the first socket of the power strip as having a plug inserted therein.

As a possible embodiment, when a socket is a two-phase socket, a sensor is arranged in a recess between two holes of the two-phase socket; and when a socket is a three-phase socket, a sensor is arranged in a recess between three holes of the three-phase socket.

As a possible embodiment, a sensor is arranged at the bottom of a hole of each socket.

Regarding the apparatuses in the above embodiments, the specific manners for the individual modules to perform operations have been described in detail in the present embodiments of the related methods and will not be elaborated herein.

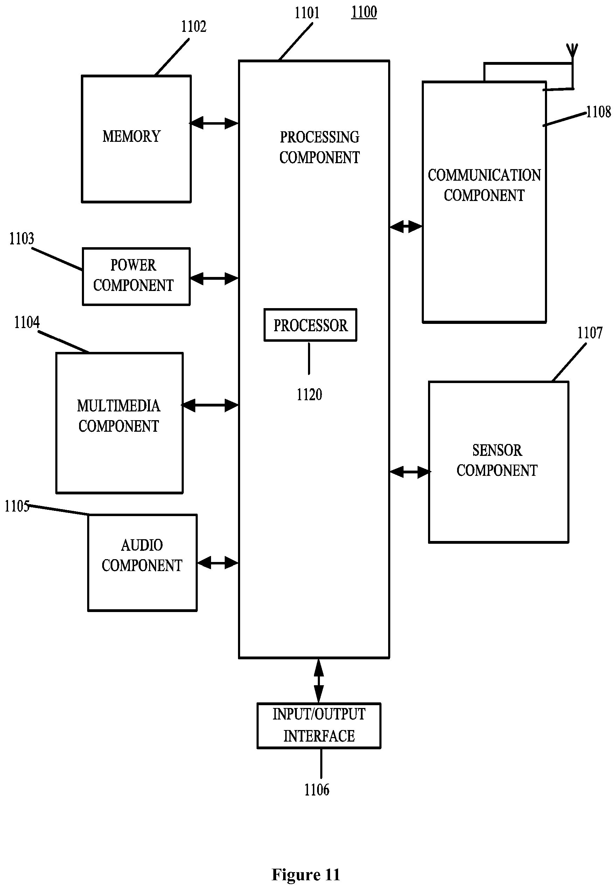

Fig. 11 is a block view of an energization apparatus for a power strip according to an exemplary embodiment. The apparatus is applicable to a terminal device. Fox example, the apparatus 1100 may be a mobile phone, a game console, a computer, a tablet device, a personal digital assistance etc.

The apparatus 1100 may comprise one or more following components: a processing component 1101, a memory 1102, a power component 1103, a multimedia component 1104, an audio component 1105, an input/output (I/O) interface 1106, a sensor component 1107 and a communication component 1108.

The processing component 1101 typically controls overall operations of the apparatus 1100, such as the operations associated with display, data communications, multimedia operations and recording operations. The processing component 1101 may include one or more processors 1120 to execute instructions to perform all or part of the steps in the above described methods. Moreover, the processing component 1101 may include one or more modules which facilitate the interaction between the processing component 1101 and other components. For example, the processing component 1101 may comprise a multimedia module to facilitate the interaction between the multimedia component 1104 and the processing component 1101.

The memory 1102 is configured to store various types of data to support the operation of the apparatus 1100. Examples of such data comprise instructions for any applications or methods operated on the apparatus 1100, various kinds of data, messages, pictures, video, etc. The memory 1102 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1103 provides power to various components of the apparatus 1100. The power component 1103 may comprise a power management system, one or more power sources, and any other components associated with the generation, management, and distribution of power in the apparatus 1100.

The multimedia component 1104 comprises a screen providing an output interface between the apparatus 1100 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 1104 includes a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1105 is configured to output and/or input audio signals. For example, the audio component 1105 includes a microphone (MIC) configured to receive an external audio signal when the apparatus 1100 is in an operation mode, such as a call mode, a recording mode, and a voice recognition mode. The received audio signal may be further stored in the memory 1102 or transmitted via the communication component 1108. In some embodiments, the audio component 1105 further includes a speaker to output audio signals.

The I/O interface 1106 provides an interface between the processing component 1101 and peripheral interface modules, such as a keyboard, a click wheel, buttons, and the like. The buttons may include but are not limited to a home button, a sound volume button, a start button and a locking button.

The sensor component 1107 comprises one or more sensors to provide status assessments of various aspects of the apparatus 1100. For instance, the sensor component 1107 may detect an open/closed status of the apparatus 1100, relative positioning of components, e.g., the display and the keypad, of the apparatus 1100, a change in position of the apparatus 1100 or a component of the apparatus 1100, presence or absence of user's contact with the apparatus 1100, an orientation or an acceleration/deceleration of the apparatus 1100, and a change in temperature of the apparatus 1100. The sensor component 1107 may include a proximity sensor configured to detect the presence of nearby objects without any physical contact. The sensor component 1107 may also include a light sensor, such as a CMOS or CCD image sensor, for use in imaging applications. In some embodiments, the sensor component 1107 may also include an accelerometer sensor, a gyroscope sensor, a magnetic sensor, a pressure sensor or a temperature sensor.

The communication component 1108 is configured to facilitate communication, wired or wirelessly, between the apparatus 1100 and other devices. The apparatus 1100 can access a wireless network based on a communication standard, such as WiFi, 2G, or 3G, or a combination thereof. In one exemplary embodiment, the communication component 1108 receives a broadcast signal or broadcast associated information from an external broadcast management system via a broadcast channel. In one exemplary embodiment, the communication component 1108 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 1102, executable by the processor 1120 in the apparatus 1100, for performing the above-described methods. For example, the non-transitory computer-readable storage medium may be a ROM, a RAM, a CD-ROM, a magnetic tape, a floppy disc, an optical data storage device, and the like.

There is provided an energization apparatus for a power strip. The apparatus comprises: a processor, and a memory configured to store instructions executable by the processor. The processor is configured for: de-energizing respective sockets of the power strip; detecting use states of the respective sockets of the power strip using independently powered sensors; and when the use state of a first socket of the power strip is having a plug inserted therein, controlling the first socket to be energized.

The processor may be further configured such that detecting the use states of the respective sockets of the power strip using the independently powered sensors comprises: detecting the light intensity information corresponding to the respective sockets of the power strip using light intensity sensors, the light intensity information indicating light intensities of the respective sockets; and when the light intensity information corresponding to the first socket of the power strip is less than or equal to a preset light intensity threshold, determining the use state of the first socket of the power strip as having a plug inserted therein.

The processor may be further configured such that when the light intensity information corresponding to the first socket of the power strip is less than or equal to the preset light intensity threshold, determining the use state of the first socket of the power strip as having a plug inserted therein comprises: when the light intensity information corresponding to the first socket of the power strip is less than or equal to the preset light intensity threshold, and the light intensity information corresponding to at least one second socket other than the first socket of the power strip is greater than the preset light intensity threshold, determining the use state of the first socket of the power strip as having a plug inserted therein.

The processor may be further configured such that detecting the use states of the respective sockets of the power strip using the independently powered sensors comprises: detecting by a distance sensor a distance between an inserted object in each of the respective sockets and the distance sensor; when a distance between an inserted object in the first socket of the power strip and the distance sensor is less than or equal to a preset distance threshold, determining the use state of the first socket of the power strip as having a plug inserted therein.

The processor may be further configured such that detecting the use states of the respective sockets of the power strip using the independently powered sensors comprises: when the light intensity information of each socket of the power strip is less than or equal to the preset light intensity threshold, detecting by a distance sensor a distance between an inserted object in each of the respective sockets and the distance sensor; when a distance between an inserted object in the first socket of the power strip and the distance sensor is less than or equal to a preset distance threshold, determining the use state of the first socket of the power strip as having a plug inserted therein.

The processor may be further configured such that when a socket is a two-phase socket, a sensor is arranged in a recess between two holes of the two-phase socket; and when a socket is a three-phase socket, a sensor is arranged in a recess between three holes of the three-phase socket; the sensor is exposed in the air.

The processor may be further configured such that a sensor is arranged at the bottom of a hole of each socket, and is exposed in the air.

A non-transitory computer-readable storage medium stores executable instructions that, when executed by the processor of the apparatus 1100, cause the apparatus 1100 to execute the above energization method for a power strip. The method comprises: de-energizing respective sockets of the power strip; detecting use states of the respective sockets of the power strip using independently powered sensors; and when the use state of a first socket of the power strip is having a plug inserted therein, controlling the first socket to be energized.

The instructions in the storage medium may be configured such that detecting the use states of the respective sockets of the power strip using the independently powered sensors comprises: detecting the light intensity information corresponding to the respective sockets of the power strip using light intensity sensors, the light intensity information indicating light intensities of the respective sockets; and when the light intensity information corresponding to the first socket of the power strip is less than or equal to a preset light intensity threshold, determining the use state of the first socket of the power strip as having a plug inserted therein.

The instructions in the storage medium may be configured such that when the light intensity information corresponding to the first socket of the power strip is less than or equal to the preset light intensity threshold, determining the use state of the first socket of the power strip as having a plug inserted therein comprises: when the light intensity information corresponding to the first socket of the power strip is less than or equal to the preset light intensity threshold, and the light intensity information corresponding to at least one second socket other than the first socket of the power strip is greater than the preset light intensity threshold, determining the use state of the first socket of the power strip as having a plug inserted therein.

The instructions in the storage medium may be configured such that detecting the use states of the respective sockets of the power strip using the independently powered sensors comprises: detecting by a distance sensor a distance between an inserted object in each of the respective sockets and the distance sensor; when a distance between an inserted object in the first socket of the power strip and the distance sensor is less than or equal to a preset distance threshold, determining the use state of the first socket of the power strip as having a plug inserted therein.

The instructions in the storage medium may be configured such that detecting the use states of the respective sockets of the power strip using the independently powered sensors comprises: when the light intensity information of each socket of the power strip is less than or equal to the preset light intensity threshold, detecting by a distance sensor a distance between an inserted object in each of the respective sockets and the distance sensor; when a distance between an inserted object in the first socket of the power strip and the distance sensor is less than or equal to a preset distance threshold, determining the use state of the first socket of the power strip as having a plug inserted therein.

The instructions in the storage medium may be configured such that when a socket is a two-phase socket, a sensor is arranged in a recess between two holes of the two-phase socket; and when a socket is a three-phase socket, a sensor is arranged in a recess between three holes of the three-phase socket; the sensor is exposed in the air.

The instructions in the storage medium may be configured such that a sensor is arranged at the bottom of a hole of each socket, and is exposed in the air.

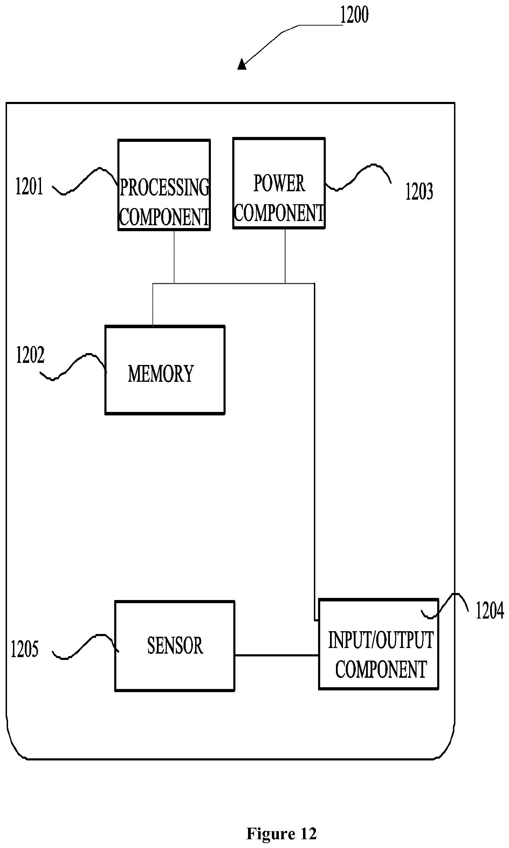

Fig. 12 is a block view of an embodiment of a cleaning apparatus 1200 of a cleaning robot. For example, the apparatus 1200 may be provided as a power strip. As shown in Fig. 12, the apparatus 1200 includes a processing component 1201 which further includes one or more processors, and memory resources represented by a memory 1202 for storing instructions executable by the processing component 1201, such as application programs. The application programs stored in the memory 1202 may include one or more modules corresponding to a set of instructions. In addition, the processing component 1201 is configured to perform instructions so as to perform the above methods to energize the respective sockets.

The apparatus 1200 may also include a power component 1203 configured to execute the power supply management of the apparatus 1200, and an input/output (I/O) interface 104 for providing an interface between the processing component 1201 and the sensor 1205. The apparatus 1200 may operate an operating system stored in the memory 1202, such as Windows Server^{™}, Mac OS X^{™}, Unix^{™}, Linux^{™}, FreeBSD^{™} or the like.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An energization method for a power strip, comprising:
de-energizing (101) respective sockets of the power strip;
detecting (102) use states of the respective sockets of the power strip using independently powered sensors; and
when the use state of a first socket of the power strip is having a plug inserted therein, controlling (103) the first socket to be energized;
wherein detecting (102) the use states of the respective sockets of the power strip using the independently powered sensors comprises:
detecting (A1) light intensity information corresponding to the respective sockets of the power strip using light intensity sensors arranged on the power strip, the light intensity information indicating light intensities of the respective sockets; and
**characterized in that**
when the light intensity information corresponding to each socket of the power strip is less than or equal to the preset light intensity threshold, detecting (C1) by a distance sensor a distance between an inserted object in each of the respective sockets and the distance sensor;
when a distance between an inserted object in the first socket of the power strip and the distance sensor is less than or equal to a preset distance threshold, determining (C2) the use state of the first socket of the power strip as having a plug inserted therein.

2. The method of claim 1, wherein when the socket is a two-phase socket (21), the light intensity sensor is arranged in a recess (22) between two holes of the two-phase socket (21); and when the socket is a three-phase socket (23), the light intensity sensor is arranged in a recess (24) between three holes of the three-phase socket (23).

3. The method of claim 1, wherein the distance sensor is arranged at the bottom of a hole of each socket.

4. An energization apparatus for a power strip, comprising:
a power supply module (701) configured to control power supply of respective sockets of the power strip and to de-energize the respective sockets of the power strip;
a detection module (702) configured to detect use states of the respective sockets of the power strip using independently powered sensors; and
a control module (703) configured to, when the use state of a first socket of the power strip is having a plug inserted therein, control the first socket to be energized, the detection module (702) comprises:
a first detection sub-module (7021) configured to detect light intensity information corresponding to the respective sockets of the power strip using light intensity sensors arranged on the power strip, the light intensity information indicating light intensities of the respective sockets;
**characterized in that** the detection module (702) further comprises:
a third detection sub-module (7025) configured to, when the light intensity information of each socket of the power strip is less than or equal to the preset light intensity threshold, detect by a distance sensor a distance between an inserted object in each of the respective sockets and the distance sensor; and
a third determination sub-module (7026) configured to, when a distance between an inserted object in the first socket of the power strip and the distance sensor is less than or equal to a preset distance threshold, determine the use state of the first socket of the power strip as having a plug inserted therein.

5. An energization apparatus for a power strip, comprising: a processor (1120), and a memory (1102) configured to store instructions executable by the processor (1120), **characterized in that** the processor (1120) is configured to perform the energization method for a power strip according to any one of claims 1 to 3.

6. A computer program including instructions for executing the steps of an energization method for a power strip according to any one of claims 1 to 3, when said program is executed by a computer.

7. A recording medium readable by a computer and having recorded thereon a computer program including instructions for executing the steps of an energization method for a power strip according to any one of claims 1 to 3.

## Patentansprüche

1. Verfahren zum Bestromen einer Steckdosenleiste mit den folgenden Schritten:
Abschalten (101) jeweiliger Steckdosen der Steckdosenleiste;
Erkennen (102) von Nutzungszuständen der jeweiligen Steckdosen der Steckdosenleiste mittels unabhängig bestromter Sensoren; und
wenn der Nutzungszustand einer ersten Steckdose der Steckdosenleiste einen in diese eingesteckten Stecker aufweist, Steuern (103) der ersten Steckdose zur Bestromung derselben;
wobei das Erkennen (102) von Nutzungszuständen der jeweiligen Steckdosen der Steckdosenleiste mittels unabhängig bestromter Sensoren den folgenden Schritt aufweist:
Erkennen (A1) von den jeweiligen Steckdosen der Steckdosenleiste entsprechenden Lichtstärkeinformationen unter Verwendung von an der Steckdosenleiste angeordneten Lichtstärkesensoren, wobei die Lichtstärkeinformationen Lichtstärken der jeweiligen Steckdosen angeben; und
**dadurch gekennzeichnet, dass**,
wenn die jeder Steckdose der Steckdosenleiste entsprechenden Lichtstärkeinformationen geringer als oder gleich einem voreingestellten Lichtstärkenschwellenwert sind, eine Entfernung zwischen einem eingesteckten Objekt in jeder der jeweiligen Steckdosen und einem Entfernungssensor durch den Entfernungssensor erkannt wird (C1);
wenn eine Entfernung zwischen einem eingesteckten Objekt in der ersten Steckdose der Steckdosenleiste und dem Entfernungssensor geringer als oder gleich einem voreingestellten Entfernungsschwellenwert ist, der Nutzungszustand der ersten Steckdose der Steckdosenleiste als einen darin eingesteckten Stecker aufweisend bestimmt wird (C2).

2. Verfahren nach Anspruch 1, bei welchem, wenn die Steckdose eine zweiphasige Steckdose (21) ist, der Lichtstärkensensor in einer Ausnehmung (22) zwischen zwei Löchern der zweiphasigen Steckdose (21) angeordnet ist; und wenn die Steckdose eine dreiphasige Steckdose (23) ist, der Lichtstärkesensor in einer Ausnehmung (24) zwischen drei Löchern der dreiphasigen Steckdose (23) angeordnet ist.

3. Verfahren nach Anspruch 1, bei welchem der Entfernungssensor am Boden eines Lochs jeder Steckdose angeordnet ist.

4. Bestromungsvorrichtung für eine Steckdosenleiste, mit:
einem Stromversorgungsmodul (701), das dazu ausgebildet ist, die Stromversorgung jeweiliger Steckdosen der Steckdosenleiste zu steuern und die jeweiligen Steckdosen der Steckdosenleiste abzuschalten;
einem Erkennungsmodul (702), das dazu ausgebildet ist, Nutzungszustände der jeweiligen Steckdosen der Steckdosenleiste unter Verwendung unabhängig bestromter Sensoren zu erkennen; und
einem Steuerungsmodul (703), das dazu ausgebildet ist, die erste Steckdose zur Bestromung zu steuern, wenn der Nutzungszustand einer ersten Steckdose der Steckdosenleiste einen in diese eingesteckten Stecker aufweist,
wobei das Erkennungsmodul (702) aufweist:
ein erstes Erkennungssubmodul (7021), das dazu ausgebildet ist, den jeweiligen Steckdosen der Steckdosenleiste entsprechende Lichtstärkeninformationen unter Verwendung von an der Steckdosenleiste angeordneten Lichtstärkensensoren zu erkennen, wobei die Lichtstärkeninformationen Lichtstärken der jeweiligen Steckdosen angeben;
**dadurch gekennzeichnet, dass** das Detektionsmodul (702) ferner aufweist:
ein drittes Detektionssubmodul (7025), das dazu ausgebildet ist, wenn die Lichtstärkeninformationen jeder Steckdose der Steckdosenleiste geringer als oder gleich dem voreingestellten Lichtstärkenschwellenwert sind, mittels eines Entfernungssensors eine Entfernung zwischen einem eingesteckten Objekt in jeder der jeweiligen Steckdosen und dem Entfernungssensor zu erkennen; und
ein drittes Bestimmungssubmodul (7026), das dazu ausgebildet ist, wenn eine Entfernung zwischen einem eingesteckten Objekt in der ersten Steckdose der Steckdosenleiste und dem Entfernungssensor geringer als oder gleich einem voreingestellten Entfernungsschwellenwert ist, den Nutzungszustand der ersten Steckdose der Steckdosenleiste als einen darin eingesteckten Stecker aufweisend zu bestimmen.

5. Bestromungsvorrichtung für eine Steckdosenleiste mit: einem Prozessor (1120), und einem Speicher (1102), der dazu ausgebildet ist, von dem Prozessor (1120) ausführbare Befehle zu speichern, **dadurch gekennzeichnet, dass** der Prozessor (1120) dazu ausgebildet ist, das Bestromungsverfahren für eine Steckdosenleiste nach einem der Ansprüche 1 bis 3 auszuführen.

6. Computerprogramm mit Befehlen zur Ausführung der Schritte eines Bestromungsverfahrens für eine Steckdosenleiste nach einem der Ansprüche 1 bis 3, wenn das Programm von einem Computer ausgeführt wird.

7. Aufzeichnungsmedium, das von einem Computer lesbar ist und auf welchem ein Computerprogramm aufgezeichnet ist, das Befehle zur Ausführung der Schritte eines Bestromungsverfahrens für eine Steckdosenleiste nach einem der Ansprüche 1 bis 3 aufweist.

## Revendications

1. Procédé de mise sous tension pour une barre d'alimentation, comprenant :
la mise hors tension (101) de prises respectives de la barre d'alimentation ;
la détection (102) d'états d'utilisation des prises respectives de la barre d'alimentation à l'aide de capteurs alimentés indépendamment ; et
lorsque l'état d'utilisation d'une première prise de la barre d'alimentation est d'avoir une fiche insérée en son sein, la commande (103) de la première prise pour qu'elle soit mise sous tension ;
dans lequel la détection (102) des états d'utilisation des prises respectives de la barre d'alimentation à l'aide des capteurs alimentés indépendamment comprend :
la détection (A1) d'informations d'intensité de lumière correspondant aux prises respectives de la barre d'alimentation à l'aide de capteurs d'intensité de lumière agencés sur la barre d'alimentation, les informations d'intensité de lumière indiquant des intensités de lumière des prises respectives ; et
**caractérisé en ce que**
lorsque les informations d'intensité de lumière correspondant à chaque prise de la barre d'alimentation sont inférieures ou égales au seuil d'intensité de lumière prédéfini, on détecte (C1) par un capteur de distance une distance entre un objet inséré dans chacune des prises respectives et le capteur de distance ;
lorsqu'une distance entre un objet inséré dans la première prise de la barre d'alimentation et le capteur de distance est inférieure ou égale à un seuil de distance prédéfini, on détermine (C2) l'état d'utilisation de la première prise de la barre d'alimentation comme ayant une fiche insérée en son sein.

2. Procédé selon la revendication 1, dans lequel lorsque la prise est une prise biphasée (21), le capteur d'intensité de lumière est agencé dans un évidement (22) entre deux trous de la prise biphasée (21) ; et
lorsque la prise est une prise triphasée (23), le capteur d'intensité de lumière est agencé dans un évidement (24) entre trois trous de la prise triphasée (23).

3. Procédé selon la revendication 1, dans lequel le capteur de distance est agencé au fond d'un trou de chaque prise.

4. Appareil de mise sous tension pour une barre d'alimentation, comprenant :
un module d'alimentation électrique (701) configuré pour commander l'alimentation électrique de prises respectives de la barre d'alimentation et pour mettre hors tension les prises respectives de la barre d'alimentation ;
un module de détection (702) configuré pour détecter des états d'utilisation des prises respectives de la barre d'alimentation à l'aide de capteurs alimentés indépendamment ; et
un module de commande (703) configuré pour, lorsque l'état d'utilisation d'une première prise de la barre d'alimentation est d'avoir une fiche insérée en son sein, commander la première prise pour qu'elle soit sous tension,
le module de détection (702) comprend :
un premier sous-module de détection (7021) configuré pour détecter des informations d'intensité de lumière correspondant aux prises respectives de la barre d'alimentation à l'aide de capteurs d'intensité de lumière agencés sur la barre d'alimentation, les informations d'intensité de lumière indiquant des intensités de lumière des prises respectives ;
**caractérisé en ce que** le module de détection (702) comprend en outre :
un troisième sous-module de détection (7025) configuré pour, lorsque les informations d'intensité de lumière de chaque prise de la barre d'alimentation sont inférieures ou égales au seuil d'intensité de lumière prédéfini, détecter par un capteur de distance une distance entre un objet inséré dans chacune des prises respectives et le capteur de distance ; et
un troisième sous-module de détermination (7026) configuré pour, lorsqu'une distance entre un objet inséré dans la première prise de la barre d'alimentation et le capteur de distance est inférieure ou égale à un seuil de distance prédéfini, déterminer l'état d'utilisation de la première prise de la barre d'alimentation comme ayant une fiche insérée en son sein.

5. Appareil de mise sous tension pour une barre d'alimentation, comprenant : un processeur (1120), et une mémoire (1102) configurée pour stocker des instructions exécutables par le processeur (1120), **caractérisé en ce que** le processeur (1120) est configuré pour mettre en oeuvre le procédé de mise sous tension pour une barre d'alimentation selon l'une quelconque des revendications 1 à 3.

6. Programme d'ordinateur comportant des instructions pour exécuter les étapes d'un procédé de mise sous tension pour une barre d'alimentation selon l'une quelconque des revendications 1 à 3, lorsque ledit programme est exécuté par un ordinateur.

7. Support d'enregistrement lisible par un ordinateur et sur lequel est enregistré un programme d'ordinateur comportant des instructions permettant d'exécuter les étapes d'un procédé de mise sous tension pour une barre d'alimentation selon l'une quelconque des revendications 1 à 3.
